# EUROPÄISCHE PATENTSCHRIFT

(11) **EP 1 050 152 B1**
(45) Veröffentlichungstag und Bekanntmachung des Hinweises auf die Patenterteilung: **10.04.2002**
(21) Anmeldenummer: 99906045.2
(22) Anmeldetag: 13.01.1999
(51) Int. Cl.: H04M 3/50, H04M 15/00

(54) **AUSKUNFTSDIENST IN EINEM TELEKOMMUNIKATIONSNETZ**
INFORMATION SERVICE IN A TELECOMMUNICATIONS NETWORK
SERVICE DE RENSEIGNEMENT DANS UN RESEAU DE TELECOMMUNICATION

(30) Priorität: 20.01.1998 DE 19802005
(43) Veröffentlichungstag der Anmeldung: 08.11.2000
(73) Patentinhaber: SIEMENS AKTIENGESELLSCHAFT, 80333 München (DE)
(72) Erfinder: PREISS, Harald, D-83684 Tegernsee (DE)
(86) Internationale Anmeldenummer: DE9900042
(87) Internationale Veröffentlichungsnummer: WO9938309

(56) Entgegenhaltungen:
- EP-A- 0 238 257
- EP-A- 0 426 361
- EP-A- 0 558 326
- EP-A- 0 715 444
- EP-A- 0 735 735
- WO-A-97/50235

## Beschreibung

Einen Auskunftsdienst für Benutzer von Telefonen gibt es schon sehr lange. Dabei konnte der Kunde bislang über eine zentrale Telefonnummer einen Mitarbeiter des Telekommunikationsdienstes erreichen, der dann in einer Datenbank (etwa über PC oder Telefonbuch) die gewünschte Nummer ermittelt und mündlich an den Nachfragenden meldet.
Mit der Erweiterung des Dienstangebotes in Form der "Komfort Auskunft" können inzwischen auch weitergehende Auskünfte erfragt werden, wie zum Beispiel die Adresse des gesuchten Teilnehmers.

In der letzten Zeit, mit der Durchdringung von Personal Computers auch im privaten Bereich, gibt es von verschiedenen Anbietern auch CD-ROMs, auf denen ein komplettes Telefonbuch, zum Beispiel von Deutschland, enthalten ist. Dort kann man oftmals nach beliebigen Kriterien suchen, nicht ausschließlich nach dem Namen.

Wer über einen Internetanschluß verfügt, hat weiterhin die Möglichkeit auf einen Auskunftsdienst im WWW (wie unter der Adresse http://www.teleauskunft.de/ der Deutschen Telekom) zuzugreifen.

Die Verwendung von CD-ROMs birgt mehrere Nachteile in sich. Da der Datenbestand dieser Auskunftsdateien sehr schnell veraltet, ist der Kunde gezwungen, in regelmäßigen kurzen Abständen eine neue Version dieser CD zu erwerben, wenn er sichergehen will, daß die Auskünfte korrekt sind. Zudem ist er bei der Verwendung an einen PC gebunden, der zudem ein CD-Laufwerk oder einen Internetanschluß besitzen muß.

Auch die Inanspruchnahme der herkömmlichen Telefonauskunft ist mit Nachteilen behaftet. So muß der Nachfragende immer einen Zettel zur Hand haben, um die ihm mitgeteilte Nummer zu notieren damit er sie hinterher wieder in das Endgerät eingeben kann. Zudem kann es passieren, daß die angewählte Auskunftsnummer belegt ist und der Kunde wiederholt Anrufversuche starten muß, bis er endlich eine Auskunftsstelle erreicht.

Für den Dienstanbieter ergibt sich der Nachteil, daß er für diesen Dienst einen sehr hohen Personalbedarf hat. Um diesen zu verringern, erfolgt inzwischen die Ansage der gewünschten Telefonnummer meist mechanisch, was wiederum für den Kunden das Problem mit sich bringt, daß er bei mehreren gesuchten Rufnummern oder Adressen jedesmal neu die Nummer der Auskunft anwählen muß.

Aufgabe der Erfindung ist es, einen komfortablen Auskunftsdienst anzubieten, der sowohl für den Kunden als auch für den Dienstanbieter die obengenannten Nachteile vermeidet.

Diese Aufgabe wird gelöst durch einen neuen Dienst in einem Intelligenten Netz, mit Merkmalen nach Patentanspruch 1 und durch eine Vorrichtung in einem Intelligenten Netz mit Merkmalen nach Patentanspruch 4.

Dabei kann man von einem beliebigen Kommunikationsendgerät aus durch Wählen der Service Nummer diesen Dienstes im Intelligenten Netz aufrufen. Durch Eingabe eines gewünschten Antwortformates (zum Beispiel Fax, SMS, E-Mail, Sprachausgabe) und einer Antwortadresse (Faxgeräte-Nummer, Telefonnummer, Internet-Nummer) kann das Endgerät adressiert werden, an welches das Auskunftsergebnis zurückgemeldet werden soll. Weiterhin müssen Suchbegriffe eingegeben werden und möglicherweise der Umfang der gewünschten Auskunft (nur Telefonnummer oder E-Mail Adresse oder Adresse...). Eine zentrale Instanz wertet die Anfrage aus, ermittelt das Ergebnis in einer zentralen Teilnehmerdatenbank, konvertiert das Ergebnis in das gewünschte Format und sendet das Ergebnis dann zurück an die gewünschte Antwortadresse.

Dieses Vorgehen vermeidet die in der Einleitung beschriebenen Nachteile und hat zudem den wesentlichen Vorteil, daß man von jedem beliebigen Telekommunikationsendgerät eine Anfrage starten kann und deren Antwort dann auf ein beliebiges anderes Endgerät übertragen lassen. Zudem kann die nachgefragte Information noch umfangreicher sein als bei jedem bisher bekannten Auskunftsverfahren über Teilnehmerdaten in einem Telekommunikationsnetz.

Vorteilhafte Ausgestaltungen und Weiterbildungen sind in den Unteransprüchen angegeben.

Dabei werden der Dienst in die bereits vorhandenen Strukturen eines Intelligenten Netzes eingepaßt. Die zentrale Instanz ist der Service Control Point SCP und der Zugriff auf die zentrale Datenbank über Teilnehmerdaten des Kommunikationsnetze geschieht auf eine bereits existierende Datenbank für Teilnehmerdaten die im SCP oder in der Vermittlungsstelle (dem SSP, Service Switching Point).

Im folgenden wird die Erfindung mit Hilfe von einer Figur und anhand von Ausführungsbeispielen erläutert.

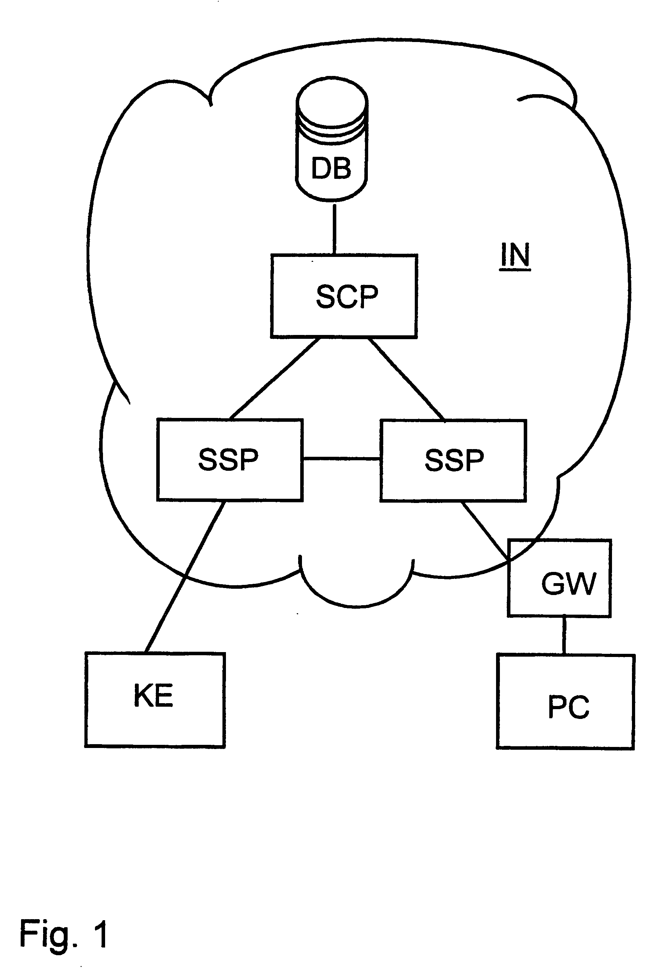

Dabei zeigt die Figur einen prinzipiellen Aufbau eines Telekommunikationsnetzes mit den für die Erfindung wichtigsten Elementen eines Intelligenten Netzes.

Bei einem Intelligenten Netz handelt es sich um ein architekturelles Konzept, welches unter anderem Netzbetreibern in einfacher Weise erlaubt, Telekommunikationsdienste für ihre Kunden zu definieren und bereitzustellen. Durch graphische Entwicklungstools und die Kombination von Software Bausteinen (Service Implementation Blocks SIB) ist das Design und die Realisierung von Diensten sehr erleichtert.

Der Zugriff des Dienstbenutzers geschieht bei einem Intelligenten Netz durch ein Kommunikationsendgerät KE, welches zum Beispiel ein Telefon, ein Mobiltelefon, ein Faxgerät oder ein anderes beliebiges Endgerät sein kann. Es ist auch ein Personal Computer PC angeschlossen, der zum Beispiel über das Internet und ein Gateway GW an das Telekommunikationsnetz angeschlossen ist.
Alle Endgeräte sind (teilweise über Vermittlungsknoten) mit dem Intelligenten Netz verbunden.
Ein Dienstaufruf wird über geeignete ausgezeichnete Vermittlungsknoten (SSP, Service Switching Point) an eine zentrale Diensteinheit (SCP, Service Control Point) weitergeleitet. Diese Diensteinheit hat außerdem eine Verbindung zu einer zentralen Datenbank DB, auf welcher die gesuchte Information abgespeichert und regelmäßig aktualisiert wird.
Sobald der SCP einen entsprechenden Dienstaufruf empfängt, muß er diesen auswerten. Dann muß die gewünschte Information aus der Datenbank ermittelt werden. Danach wird die ermittelte Information in das gewünschte Datenformat umgewandelt werden und zuletzt wird diese dem Kunden an die gewünschte Adresse gesendet.

Die konkrete Umsetzung dieser Idee in einen Dienst kann zum Beispiel durch das Konzept des Intelligenten Netzes erfolgen, welche die geeigneten Möglichkeiten, "Service Creation", bietet. Dabei wird die Dienstlogik (Service Logic), die den Dienst realisiert, kreiert aus Service Implementation Blocks (SIB), die teilweise bereits vorhanden sind (wie Ansagen, Sprach- und andere Konvertierungsmechanismen u.s.w.) oder neu entwickelt werden müssen (wie z. B. die Datenbankabfragen, geeignete Oberflächen für den Zugriff über Internet etc.).
Als zentrale Datenbank bietet sich z. B. die bei EWSD Technik für die Vermittlungsstellen (SSP) existierende Datenbank von ADMOSS, einem System für Administration, an.

Der Kunde wählt die Dienstnummer des Auskunftsdienstes an. Das weitere Vorgehen ist dann abhängig von der Art der gewünschten Auskunft.

1. Beispiel: Der Kunde fragt telefonisch unter Angabe der Nummer nach dem Namen des gesuchten Teilnehmers.
Der Kunde kann die bekannte Nummer auf verschiedene Weise eingeben, zum Beispiel in DTMF Wählverfahren, als Fax, Short Message (über ein Mobiltelefon), E-Mail oder als Spracheingabe. Die Weiterverarbeitung der Spracheingabe kann mit einer Spracherkennungsroutine geschehen, die sprecherunabhängig arbeiten muß, oder mit Unterstützung eines "Operators", also eines Mitarbeiters, der das Eingeben übernimmt. Dabei kann der Kunde auch mit Ansagen durch ein Menü geleitet werden, das der Kunde auch durch DTMF, Spracheingabe oder ähnliches steuert. Der Ruf wird an eine zentrale Stelle weitergeleitet, die durch eine Datenbankabfrage in einer zentralen Datenbank die gewünschte Information ermittelt. Danach wird der Kunde gefragt, wie er den gewünschten Namen erhalten will. Sofern ein anderes Endgerät als Zielgerät ausgewählt wird, muß der Kunde danach die Adresse (in der Regel eine Telefonnummer) eingeben. Dabei kann das System die eingegebene Nummer sicherheitshalber gegenprüfen (etwa durch Wiederholen der erkannten Ziffernfolge).

Wenn die gesuchte Auskunft eine Nummer ist und der Name dabei bekannt, und Sprachein- und -ausgabe gewählt, so bemerkt der Kunde den Unterschied zur bisher verwendeten Telefonauskunftsdienst nicht.

2. Beispiel: Abfrage und Ausgabe einer Adresse durch Angabe des Namens mittels PC über das Internet.
Der Kunde gibt an seinem Endgerät die Adresse (URL) für den Auskunftsdienst ein. Über eine Eingabemaske kann der Kunde dann die bekannten Informationen eintragen und die gewünschten Informationen anfordern. Die Anfrage wird dann über das Internet und ein Gateway in das Telekommunikationsnetz übertragen, wo die Ermittlung der Informationen entsprechend dem ersten Beispiel durchgeführt wird.

Das erfindungsgemäße Vorgehen birgt viele Vorteile in sich. Zunächst werden die in der Einleitung genannten Nachteile der herkömmlichen Auskunft oder der Auskunfts-CDs umgangen. Durch das zentrale Aktualisieren der Auskunftsdatenbank bekommt man immer die korrekte Auskunft erteilt, es ist für den Kunden kein regelmäßiger Zukauf von neuer Software oder ähnlichem erforderlich.
Für den Kunden werden viel mehr Informationen zugänglich. Zum einen kann er dann auch die Informationen abrufen, die nicht in dem Telefonbuch, welches zu seinem Gebiet zugeordnet ist, enthalten sind. Das ist besonders interessant bei Informationen, die in den "Gelben Seiten" enthalten sind. Es ist auch wahrscheinlich, daß dieser Auskunftsdienst nicht auf ein Land beschränkt bleibt.
Außerdem werden bei diesem Vorgehen Medienbrüche umgangen.
Der Kunde ist nicht auf ein spezielles Endgerät angewiesen (entweder das Telefon oder der PC mit CD-Laufwerk), und kann sich das Ergebnis der Nachfrage an ein beliebiges Endgerät in einem beliebigen, frei wählbaren Format senden lassen.
Die Art der Nachfrage kann bei dem erfindungsgemäßen Vorgehen gegenüber herkömmlichen Methoden erweitert werden, so daß nicht bloß die Abfrage einer Telefonnummer zu einem bekannten Namen möglich ist sondern beispielsweise auch der Name zu einer bekannten Nummer oder ähnliches.
Durch die Möglichkeit, Anfragen 'offline' abzusenden ist der Kunde von der Notwendigkeit befreit, bei einer besetzten Leitung solange zu wiederholen, bis er einen Auskunftsplatz erreicht. Zudem können mehrere Anfragen hintereinander gesendet werden, ohne daß jedesmal wieder neu gewählt werden muß.

Auch für den Dienstanbieter hat das erfindungsgemäße Vorgehen Vorteile. Er kann diesen Dienst vor allem schnell und kostensparend anbieten, da die meisten Anfragen automatisch bearbeitet werden können.
Viele der hier verwendeten Komponenten sind bereits realisiert, so zum Beispiel die kundenspezifische Ansage, und können problemlos übernommen werden.
Die Preisgestaltung des Auskunftsdienstes kann dem Aufwand der Informationsermittlung angepaßt werden, so kann zum Beispiel das Ermitteln und Übertragen einer Nummer billiger sein als das Ermitteln einer Adresse. Oder der Preis ist abhängig von der Anzahl der-zurück übertragenen Auskünfte.
Es ist auch denkbar, daß der Kunde seine Anfrage priorisieren kann, das bedeutet etwa, er markiert seine Anfrage als express ein und diese wird dann bevorzugt und schneller beantwortet, dafür aber zum Beispiel auch als Extra Service höher vergebührt.

Eine Anwendung der Erfindung erweist sich in vielen Fällen vor allem für den Kunden als vorteilhaft. Folgende neue Einsatzmöglichkeiten sind zum Beispiel denkbar:
- man will im Urlaub eine Postkarte verschicken und hat die Adresse Zuhause vergessen,
- man will jemanden besuchen und stellt unterwegs fest, daß man die Hausnummer vergessen hat,
- man will jemandem etwas zuschicken und kennt bloß dessen Telefonnummer,
- man sucht eine Firma einer bestimmten Branche in einem speziellen Stadtviertel ("Gelbe Seiten").

### Abkürzungsverzeichnis

- ADMOSS: Advanced Multifunctional Operator Service System
- DB: Datenbank
- DTMF: dial tone multi frequency
- EWSD: Elektronisches Wählsystem Digital
- GW: Gateway
- IN: Intelligent Network
- PC: Personal Computer
- SCP: Service Control Point
- SIB: Service Implementation Block
- SSP: Service Switching Point
- SMS: Short Message Service

## Patentansprüche

1. Verfahren für einen Auskunftsdienst in einem Telekommunikationsnetz, wobei folgende Schritte durchgeführt werden:
a) Aufruf des Auskunftsdienstes von einem ersten Kommunikationsendgerät aus,
b) Eingabe des gewünschten Antwortformates und der gewünschten Anwortadresse eines zweiten Kommunikationsendgerätes,
c) Eingabe einer mit einer gesuchten Information korrelierten bekannten Information durch das erste Kommunikationsendgerät und Übermittlung an eine zentrale Instanz,
d) Ermitteln der gesuchten Information durch die zentrale Instanz in einer zentralen Datenmenge,
e) Konvertieren der gesuchten Information in das gewählte Antwortformat durch diese zentrale Instanz und
f) Übermitteln der gesuchten Information an das zweite Kommunikationsendgerät.

2. Verfahren nach Anspruch 1,
**dadurch gekennzeichnet, daß**
das Verfahren als Dienst in einem Intelligenten Netz realisiert ist, wobei die für die Auswertung und Ausführung der Suchanfrage und Konvertierung und Übermittlung der Suchantwort verantwortliche Software (Service Logik) auf einer netz-zentralen Instanz SCP ausgeführt wird und die Abfrage auf die zentrale Datenmenge durch eine im Intelligenten Netz bereits vorhandene Datenbank mit Teilnehmerdaten realisiert wird.

3. Verfahren nach einem der vorherigen Ansprüche,
**dadurch gekennzeichnet, daß**
die Abfrage vom Dienstbenutzer priorisiert werden kann und dann von der zentralen Einheit bei der Ausführung niedriger priorisierten Anfragen gegenüber vorgezogen werden kann.

4. Vorrichtung zur Durchführung eines Auskunftsdienstes in einem Telekommunikationsnetz,
• mit zentralen Mitteln zur Speicherung einer Datenmenge DB, und
• mit zentralen Mitteln zur Durchführung einer Suche in dieser Datenmenge und
• mit zentralen Mitteln zur Auswertung von Suchanfragen von einem ersten Telekommunikationsendgerät in dieser Datenmenge, die bestehen aus mindestens einem Suchbegriff und möglicherweise einer Antwortadresse und einem Antwortformat, und
• mit zentralen Mitteln zur Konvertierung der in dieser Datenmenge gefundenen Antwort in das gewünschte Antwortformat und
• mit Mitteln zur Übertragung der gefundenen und konvertierten Antwort an ein Telekommunikationsendgerät KE, welches entweder dem ersten Endgerät entspricht oder ein zweites Telekommunikationsendgerät ist, welches die in der Suchanfrage enthaltene Adresse hat.

5. Vorrichtung nach Anspruch 4,
**dadurch gekennzeichnet, daß**
zumindest das erste oder das zweite Kommunikationsendgerät ein Computer PC ist und das Telekommunikationsnetz aus mehreren Teilnetzen besteht, von denen ein Teilnetz das Internet ist und die Kommunikationsverbindung zum Computer über das Internet geht und über eine spezielle Vermittlungsstelle (Gateway) GW, die das Internet mit dem Restteil des Kommunikationsnetzes verbindet.

## Claims

1. Method for an information service in a telecommunications network, in which the following steps are carried out:
a) the information service is called up from a first communications terminal,
b) the desired response format and the desired response address of a second communications terminal are entered,
c) a known item of information correlated to a sought. item of information is entered via the first communications terminal and transmitted to a central authority,
d) the sought information is ascertained by the central authority in a central data record,
e) the sought information is converted into the chosen response format by this central authority, and
f) the sought information is transmitted to the second communications terminal.

2. Method according to Claim 1,
**characterized in that**
the method is in the form of a service in an intelligent network, where the software (service logic) responsible for evaluating and executing the search query and for converting and transmitting the search response is executed on an authority SCP central to the network, and the interrogation of the central data record is implemented by a database which is already present in the intelligent network and contains subscriber data.

3. Method according to one of the preceding claims,
**characterized in that**
the interrogation can be prioritized by the service user and can then be given preference over queries with a lower priority by the central unit during execution.

4. Apparatus for performing an information service in a telecommunications network,
• having central means for storing a data record DB, and
• having central means for performing a search in this data record, and
• having central means for evaluating search queries in this data record by a first telecommunications terminal, said central means comprising at least one search term and possibly a response address and a response format, and
• having central means for converting the response found in this data record into the desired response format, and
• having means for transmitting the found and converted response to a telecommunications terminal KE, which either corresponds to the first terminal or is a second telecommunications terminal which has the address contained in the search query.

5. Apparatus according to Claim 4,
**characterized in that**
at least the first or the second communications terminal is a computer PC and the telecommunications network comprises a plurality of subnetworks, of which one subnetwork is the Internet, and the communications link to the computer is routed via the Internet and via a special switching point (gateway) GW which connects the Internet to the remainder of the communications network.

## Revendications

1. Procédé destiné à un service de renseignements dans un réseau de télécommunication, les fonctions suivantes étant exécutées:
a) Appel du service de renseignements à partir d'un premier terminal de communication,
b) Entrée du format souhaité pour la réponse et de l'adresse d'un deuxième terminal de communication souhaitée pour la réponse,
c) Entrée, grâce au premier terminal de communication, d'une information connue en corrélation avec une information recherchée et transmission à une instance centrale,
d) Recherche, par l'instance centrale, de l'information souhaitée parmi un ensemble centralisé de données,
e) Conversion, par cette instance centrale, de l'information recherchée dans le format de réponse choisi et
f) Transmission de l'information recherchée au deuxième terminal de communication.

2. Procédé selon la revendication 1
**caractérisé par le fait que**
le procédé est réalisé en tant que service dans un réseau intelligent, le logiciel (Service Logic) nécessaire à l'évaluation et à l'exécution de la demande de recherche et à la conversion et à la transmission de la réponse étant exécuté sur une instance centrale SCP du réseau et la recherche parmi l'ensemble centralisé de données étant réalisée par une base de données déjà existante dans le réseau intelligent et chargée des données des abonnés.

3. Procédé selon l'une des revendications précédentes
**caractérisé par le fait que**
la recherche peut être priorisée par l'utilisateur du service et que l'unité centrale peut alors la traiter en priorité par rapport à des demandes de priorité inférieure.

4. Dispositif destiné à exécuter un service de renseignements dans un réseau de télécommunication, ayant
• des moyens centralisés pour la mémorisation d'un ensemble de données DB et
• des moyens centralisés destinés à exécuter une recherche dans cet ensemble de données et
• des moyens centralisés destinés à analyser des demandes de recherche d'un premier terminal de communication dans cet ensemble de données, qui comportent au moins un argument de recherche et, peut-être, une adresse et un format pour la réponse, et
• des moyens centralisés destinés à la conversion de la réponse trouvée dans cet ensemble de données dans le format de réponse souhaité et
• des moyens centralisés destinés à la transmission de la réponse trouvée et convertie à un terminal de télécommunication KE, lequel est ou bien identique au premier terminal ou bien un deuxième terminal de télécommunication qui a l'adresse contenue dans la demande de recherche.

5. Dispositif selon la revendication 4
**caractérisé par le fait que**
au moins le premier ou le deuxième terminal de communication est un ordinateur PC et que le réseau de télécommunication est constitué de plusieurs réseaux partiels, dont un réseau partiel est l'Internet et que la liaison de communication vers l'ordinateur passe par l'Internet et par un central particulier de commutation (gateway) GW, qui relie l'Internet avec l'autre partie du réseau de communication.
